# EUROPEAN PATENT APPLICATION

(11) **EP 1 080 824 A1**
(43) Date of publication of application: **07.03.2001**
(21) Application number: 00907962.5
(22) Date of filing: 09.03.2000
(51) Int. Cl.: B23K 35/26

(54) **LEADLESS SOLDER**

(30) Priority: 16.03.1999 JP 6950599; 24.02.2000 JP 2000047325
(71) Applicant: Nippon Sheet Glass Co., Ltd., Osaka-shi, Osaka 541-8559 (JP)
(72) Inventor: DOMI, Shinjiro, Nippon Sheet Glass Co., Ltd., Osaka-shi, Osaka 541-8559 (JP); SAKAGUCHI, Koichi, Nippon Sheet Glass Co., Ltd., Osaka-shi, Osaka 541-8559 (JP); NAKAGAKI, Shigeki, Nippon Sheet Glass Co., Ltd., Osaka-shi, Osaka 541-8559 (JP); SUGANUMA, Katsuaki, The Institute of Scientific, Ibaaraki-shi, Osaka 567-0047 (JP)
(74) Representative: Albrecht, Thomas, Dr.
(86) International application number: JP0001422
(87) International publication number: WO0054927

(57) **Abstract**

Lead-free solder comprising Sn, Zn and 0.001 to 3.0 wt% Ti. The lead-free solder does not contain toxic lead, and has sufficient bonding strength to oxide materials such as glass and ceramics.

## Description

### FIELD OF THE INVENTION

The present invention relates to lead-free solder for soldering an oxide material, such as ceramics and glass at a low temperature.

### BACKGROUND OF THE INVENTION

Electroplating or electroless plating such as gold plating, copper plating, and nickel plating is conducted on an oxide materials including ceramics and glass before soldering thereof. However, another pre-plating method preceding soldering is desired because the above plating is expensive and complicated.

Solder of Pb-Sn which can be soldered directly to glass and ceramics is disclosed in Japanese patents S49-22299B and S52-21980B.

However, lead is toxic on the health, the environment, and the ecosystem, so lead-free solder is desired.

The solder of Pb-Sn-Cd-Sb disclosed in the above Japanese patent 49-22299B is possible to be soldered directly to an oxide material such as glass and ceramics. However, toxic lead eluates from the solder in quantity to cause serious problem, to the environment, when the solder contacts acid water of rain.

The solder disclosed in the above Japanese patent S52-21980B contains rare earth materials which is useful for joining oxide materials such as glass and ceramics. However, the solder has the same problems as above, because it comprises lead as a main component.

Lead-free solder has been investigated for mounting electronic parts. For example, solder of Sn-Ag-In is disclosed in Japanese patent H9-326554A, and solder of Sn-Zn-Bi system is disclosed in Japanese patent H8-164495A. However, their bonding strength are not enough to metal oxide materials such as glass and ceramics.

Solder of Sn-Ag-Al-Zn for soldering metal oxides is disclosed in Japanese patent S55-36032B. This solder easily separates from oxide material such as glass and ceramics, because the coefficient of thermal expansion of the solder is greatly different from that of the oxide material.

### DISCLOSURE OF THE INVENTION

It is an object of the present invention to solve problems of prior art mentioned above and to provide lead-free solder comprising no toxicy lead, and capable of bonding strongly to oxide materials such as glass and ceramics.

The solder of the present invention comprises Sn and Zn as main components and further comprises at least one of Ti, Al and Cu.

It should be noted that a content value of each component represents a mean composition in the solder because Zn, Ti and Al in the solder are very easily oxidized, and tend to segregate at the surface of the solder.

A first aspect of the lead-free solder of the present invention comprises Sn, Zn and 0.001 to 3.0 wt% Ti.

The lead-free solder of the present invention may further comprise 0.001 to 3.0wt% Al.

The lead-free solder of the present invention may further comprise 0.001 to 9.0wt% Cu.

The lead-free solder of the present invention preferably comprises Sn and Zn such that a ratio of Sn to Zn (Sn/Zn) is 4.0 to 19.0. Where each of "Sn" and "Zn" represents a weight percentage thereof in the solder. In case that the lead-free solder contains 91wt% Sn and 9wt% Zn for example, the ratio of Su/Zn is 10.1 (91/9).

The lead-free solder of the present invention comprises Sn and Zn more preferably such that the ratio of Sn to Zn (Sn/Zn) is 9.0 to 12.0, and contain substantially no Cu. "Substantially no Cu" means that Cu content is not greater than Cu content included as impurity in usual raw material of the solder including raw metals of Sn and Zn.

The lead-free solder of the present invention may comprise one or more than two elements among Bi, Si and Sb in the range not more than 10 wt.%.

The lead-free solder of the present invention may comprise 0.001 to 1.0 wt.% Si.

### DETAILED DESCRIPTION OF PREFERRED EMBODIMENTS

The composition of the lead-free solder of the present invention is as follows. The content of components will be represented with a percentage by weight.

Sn (tin) is not toxic and gives good wetting property against materials to be joined, and Sn is an indispensable constituent for the solder. Zn (Zinc) is comprised in the solder in order to improve adhesion strength thereof to oxide materials such as glass and ceramics.

Ti (titanium) is extremely easy to be oxidized, but it bonds the solder to an oxide material strongly. When Ti content is less than 0.001wt%, the solder does not bond to an oxide material firmly enough. When Ti content is more than 3.0%, heat cycle resistance decreases due to increase of hardness of the solder, and further the solder becomes too hard to use due to a rise of a melting point thereof. Accordingly, Ti content is preferably 0.00 1 to 3.0%, and more preferably 0.01 to 1.0%.

Al (aluminum) is also extremely easy to be oxidized, and Al makes the solder to bond to an oxide material firmly. When Al content is less than 0.001wt%, the solder does not bond the oxide firmly. When Al content is more than 3.0%, heat cycle resistance of the solder decreases due to increase of hardness of the solder, the solder becomes to have an increased melting point, and the solder loses workability. Accordingly, Al content is preferably 0.001 to 3.0%, and more preferably 0.01 to 1.0%.

Cu (copper) has a good effect on mechanical strength of the solder. This effect is insufficient when Cu is less than 0.001%. When Cu is more than 9.0%, the melting point of the solder increases, the mechanical strength decreases and a lot of Cu-Sn intermetalic compounds grow. Accordingly, Cu content is preferably 0.001 to 9.0%, more preferably 0.01 to 3.0%.

In the lead-free solder of the present invention, the ratio of Sn to Zn (Sn/Zn) , where Sn and Zn are expressed with a percentage by weight, is preferably 4.0 to 19.0. Sn and Zn make eutectic reaction in an alloy, and eutectic structures therein consist of a minute mixture of fine Sn phases and Zn phases. The eutectic structures have high flexibility, so that stress applied to the solder is easily dispersed in the eutectic phases. The stress does not concentrate on the interface of the solder and oxide material such as glass, so that the solder hardly separates from the oxide material.

When the lead-free solder of the present invention has the Sn/Zn ratio between 9.0 and 12.0 where Sn and Zn are percentages thereof by weight, the solder preferably contains substantially no copper. When the solder has the Sn/Zn ratio of 9.0 to 12.0, the composition of the solder is near or equal to the ratio of the eutectic composition (Sn/Zn=10.1), and proeutectoids of Sn or Zn hardly grow large so that the eutectic structure of the solder becomes fine. A solder containing a lot of eutectic structures has high flexibility so that it is suitable for soldering glass and the like as mentioned above. However, grains of the eutectic phases grow large when the solder contains a lot of seed compounds. Cu and Zn in the solder tend to react with each other to form CuZn intermetalic compounds. The compounds work as seeds for of the proeutectoids, so that the eutectic grains grow large. When the grains grow large in the solder, the stress applied thereto concentrates on the grain boundary and causes fracture. Accordingly the solder is preferable to contain substantially no Cu.

The lead-free solder of the present invention may contain one or more elements among Bi, Si and Sb in a range not greater than 10%. Bi and Si improve wettability of the solder. Sb improves an appearance of the soldered solder and increases creep resistance of the solder. The solder may contain further another element such as Cr, Be, Fe, Ni, Co, Ga, Ge and P in a small amount in order to improve wettability and mechanical strength of the solder.

When Si is less than 0.001%, above effects are achieved insufficiently. Si of more than 1.0% raises the melting point of the solder so that workability of soldering is lowered. Accordingly Si content is preferably 0.001 to 1.0%, more preferably 0.01 to 0.1%.

The lead-free solder of the present invention may contain In (indium). The In decreases the melting point of the solder, improves wetting property of the solder, and improves flexibility of the solder, so that the stress applied to the interface of the soldered solder and oxide material is relaxed.

The lead-free solder of the present invention directly solders to not only an oxide such as glass and ceramics but also a metal such as Al, Ti, and Zr which is hard to be soldered due to a metal oxide film thereon.

It is preferable to use an ultrasonic equipment which gives ultrasonic vibration to the solder during soldering in case of hardsoldering materials. It is also preferable to use an equipment having a member which transmits a physical stimulus to the interface of the solder and the hardsoldering material to promote bonding to each other. The member may have a shape of a plate or a rod. The member may be rotated or vibrated.

Hereinafter, the present invention will be described referring to examples.

### Examples 1 to 24

A soda-lime glass plate (50 × 50 × 3 mm) was used as a material to be adhered with lead-free solder. The lead-free solder has a composition shown in Tables 1, 2 and 3. The solder was soldered to the glass with using an ultrasonic soldering iron having a tip which vibrates at 60kHz. The compositions in the tables are represented with a percentage by weight.

Adhering property of the solder to the glass was estimated by knifing the solder on the glass with a knife. In Tables 1, 2 and 3, a circle mark (○) of the adhering property shows that more than half of the solder remains on the glass, and a cross mark (X) shows that the solder peels off in its entirety.

**Table 1**

| Compositions of the solder (wt%) | | | | | | | | | | |
|---|---|---|---|---|---|---|---|---|---|---|
| | Example | | | | | | | | | |
| | 1 | 2 | 3 | 4 | 5 | 6 | 7 | 8 | 9 | 10 |
| Sn | 90.85 | 89.8 | 91.5 | 91.2 | 92.5 | 88.6 | 91.2 | 92.2 | 86.5 | 93.2 |
| Zn | 8.99 | 9.9 | 8.35 | 7.6 | 7.1 | 11.1 | 8.39 | 7.41 | 12.4 | 6.2 |
| Ti | 0.16 | 0.2 | 0.15 | 1 | 0.4 | 0.3 | 0.08 | 0.05 | 0.1 | 0.15 |
| Al | 0 | 0.1 | 0 | 0.2 | 0 | 0 | 0 | 0 | 0 | 0.1 |
| Cu | 0 | 0 | 0 | 0 | 0 | 0 | 0.33 | 0.34 | 1 | 0.35 |
| Sum | 100 | 100 | 100 | 100 | 100 | 100 | 100 | 100 | 100 | 100 |
| adhering property | ○ | ○ | ○ | ○ | ○ | ○ | ○ | ○ | ○ | ○ |

**Table 2**

| Compositions of the solder (wt%) | | | | | | | | | | |
|---|---|---|---|---|---|---|---|---|---|---|
| | Example | | | | | | | | | |
| | 11 | 12 | 13 | 14 | 15 | 16 | 17 | 18 | 19 | 20 |
| Sn | 90.5 | 80 | 89.9 | 95 | 80.7 | 70 | 50 | 40 | 90.05 | 60 |
| Zn | 9.0 | 19.85 | 9.0 | 3.7 | 9.8 | 29.98 | 49.99 | 56.5 | 9.9 | 39.99 |
| Ti | 0.15 | 0.03 | 0.5 | 1 | 2 | 0.007 | 0.005 | 1.5 | 0.05 | 0.003 |
| Al | 0 | 0.07 | 0.5 | 0.1 | 2.5 | 0.005 | 0.002 | 1.5 | 0 | 0.003 |
| Cu | 0.35 | 0.05 | 0.1 | 0.2 | 5 | 0.008 | 0.003 | 0.5 | 0 | 0.004 |
| Sum | 100 | 100 | 100 | 100 | 100 | 100 | 100 | 100 | 100 | 100 |
| adhering property | ○ | ○ | ○ | ○ | ○ | ○ | ○ | ○ | ○ | ○ |

**Table 3**

| Compositions of the solder (wt%) | | | | | | | |
|---|---|---|---|---|---|---|---|
| | Example | | | | Comparative Example | | |
| | 21 | 22 | 23 | 24 | 1 | 2 | 3 |
| Sn | 75 | 65 | 87 | 45 | 93.7 | 89 | 70 |
| Zn | 24.8 | 32 | 10.5 | 49.5 | 0 | 0 | 0 |
| Ti | 0.07 | 0.3 | 0.7 | 2.5 | 3.5 | 0 | 0 |
| Al | 0.05 | 0.7 | 0.3 | 2 | 2.8 | 1 | 30 |
| Cu | 0.08 | 2 | 1.5 | 1 | 0 | 10 | 0 |
| Sum | 100 | 100 | 100 | 100 | 100 | 100 | 100 |
| adhering property | ○ | ○ | ○ | ○ | X | X | X |

As shown from Tables 1, 2 and 3, each of the solder of the present invention adheres to the glass firmly, since it contains at least one of Ti, Al, Cu, Sn and Zn according to claims 1 to 5. The solder solders glasses each other firmly, since it has high mechanical strength, relaxes the stress applied to the interface between the glass and the solder during the solder is cooled. The solder of the present invention does not peel off when impact is applied thereto after it is soldered.

### Comparative examples 1-3

Table 3 shows compositions and adhesive properties of comparative examples. The compositions are represented with a percentage by weight.

In the comparative examples 1 to 3, contents of Zn and Ti are out of the scope of the present invention. In the comparative example 2, a content of Cu is out of the scope of the present invention. In the comparative example 3, a content of Al is out of the scope of the present invention. The adhesive property between the lead-free solder of the comparative examples and the glass is inferior, so that all the solder separates or peels off completely from the glass.

### Examples 25-34

A soda-lime glass plate (50 × 50 × 3 mm) was used as a material to be soldered. Lead-free solder shown in Table 4 was used. The solder was soldered to the glass plate with using the ultrasonic soldering iron having the tip which vibrates at 60kHz. Compositions shown in Table 4 are represented with a percentage by weight.

The adhesive property between the glass and the lead-free solder was estimated by knifing the solder adhered on the glass in the same way as in the Examples 1-24. In the adhesive property shown in Table 4, a circle mark (○) shows that more than half of the solder does not separate but remains on the glass, and a cross mark (X) shows that the solder separates from the glass in its entirety.

**Table 4**

| Compositions of the solder (wt%) | | | | | | | | | | |
|---|---|---|---|---|---|---|---|---|---|---|
| | Example | | | | | | | | | |
| | 25 | 26 | 27 | 28 | 29 | 30 | 31 | 32 | 33 | 34 |
| Sn | 83 | 84 | 86.8 | 76.8 | 81.3 | 90.4 | 89.99 | 90.5 | 90.45 | 90.49 |
| Zn | 9 | 8.5 | 8.7 | 7.7 | 8.1 | 9.0 | 9.0 | 8.5 | 9.0 | 9.0 |
| Ti | 0.15 | 0.05 | 0.15 | 0.15 | 0.15 | 0.08 | 0.105 | 0.15 | 0.15 | 0.159 |
| Al | 0 | 0 | 0 | 0 | 0 | 0 | 0 | 0 | 0 | 0 |
| Cu | 0.35 | 0.35 | 0.10 | 0.30 | 0.35 | 0.35 | 0.35 | 0.35 | 0.35 | 0.35 |
| Sb | 3 | 2 | 1 | 5 | 0 | 0 | 0 | 0 | 0 | 0 |
| Si | 0.5 | 0.1 | 0.2 | 0 | 0.05 | 0.02 | 0.005 | 0 | 0 | 0 |
| Bi | 1 | 3 | 2 | 5 | 0 | 0 | 0 | 0 | 0 | 0 |
| In | 3 | 2 | 1 | 5 | 10 | 0.1 | 0.5 | 0 | 0 | 0 |
| Cr | 0 | 0 | 0.05 | 0 | 0 | 0 | 0 | 0 | 0 | 0 |
| Be | 0 | 0 | 0 | 0.05 | 0 | 0 | 0 | 0 | 0 | 0 |
| Fe | 0 | 0 | 0 | 0 | 0.05 | 0 | 0 | 0 | 0 | 0 |
| Ni | 0 | 0 | 0 | 0 | 0 | 0.05 | 0 | 0 | 0 | 0 |
| Co | 0 | 0 | 0 | 0 | 0 | 0 | 0.05 | 0 | 0 | 0 |
| Ga | 0 | 0 | 0 | 0 | 0 | 0 | 0 | 0.5 | 0 | 0 |
| Ge | 0 | 0 | 0 | 0 | 0 | 0 | 0 | 0 | 0.05 | 0 |
| P | 0 | 0 | 0 | 0 | 0 | 0 | 0 | 0 | 0 | 0.001 |
| Sum | 100 | 100 | 100 | 100 | 100 | 100 | 100 | 100 | 100 | 100 |
| adhering property | ○ | ○ | ○ | ○ | ○ | ○ | ○ | ○ | ○ | ○ |

As shown in Table 4, each solder of the examples contains the components according to claims 1 to 5 and components such as Cr, Be, Fe, Ni, Co, Ga, Ge, and P according to claims 6 and 7. The solder solders glasses each other firmly, since it has high mechanical strength, relaxes the stress applied to the interface between the glass and the solder during the solder is cooled. The solder does not peel off when impact is applied thereto after it is soldered.

### INDUSTRIAL CAPABILITY

As mentioned above, the lead-free solder of the present invention does not contain toxic lead, and contains components according to claims 1 to 5, components according to claims 6 and 7, and a small amount of Cr, Be, Fe, Ni, Co, Ga, Ge and P. The solder solders glasses each other firmly, since it has high mechanical strength, relaxes the stress applied to the interface between the glass and the solder during the solder is cooled. The solder does not peel off when impact is applied thereto after it is soldered.

## Claims

1. Lead-free solder comprising Sn, Zn and 0.001 to 3.0 wt% of Ti.

2. Lead-free solder as claimed in claim 1, wherein said solder further contains 0.001 to 3.0wt% of Al.

3. Lead-free solder as claimed in of claim 1 or 2, wherein said solder further contains 0.001 to 9.0 wt% of Cu.

4. Lead-free solder as claimed in any of claims 1 through 3, wherein a ratio of Sn to Zn (Sn/Zn) represented with a percentage by weight is 4.0 to 19.0.

5. Lead-free solder as claimed in any of claims 1, 2, and 4, wherein the ratio of Sn to Zn (Sn/Zn) represented with a percentage by weight is 9.0 to 12.0, and said solder contains substantially no Cu.

6. Lead-free solder as claimed in any of claims 1 through 5, wherein said solder further contains at least one element selected from a group consisting of Bi, Si and Sb in an amount of less than 10 wt%.

7. Lead-free solder as claimed in any of claims 1 through 6, wherein said solder further contains 0.001 to 1.0 wt% of Si.

8. Lead-free solder consisting essentially of Sn, Zn and 0.001 to 3.0 wt% of Ti, wherein a ratio of Sn to Zn (Sn/Zn) represented with a percentage by weight is 4.0 to 19.0.

9. Lead-free solder consisting essentially of Sn, Zn, 0.001 to 3.0 wt% of Ti, and 0.001 to 3.0 wt% of Al, wherein a ratio of Sn to Zn (Sn/Zn) represented with a percentage by weight is 4.0 to 19.0.

10. Lead-free solder consisting essentially of Sn, Zn, 0.001 to 3.0 wt% of Ti, and 0.001 to 9.0 wt% of Cu wherein a ratio of Sn to Zn (Sn/Zn) represented with a percentage by weight is 4.0 to 19.0 (excluding the range from 9.0 to 12.0).

11. Lead-free solder consisting essentially of Sn, Zn, 0.001 to 3.0 wt% of Ti, 0.001 to 3.0 wt% of Al, and 0.001 to 9.0 wt% of Cu, wherein a ratio of Sn to Zn (Sn/Zn) represented with a percentage by weight is 4.0 to 19.0 (excluding the range from 9.0 to 12.0).

12. Lead-free solder as claimed in any of claims 8 trough 11, wherein said solder further contains at least one element selected from a group consisting of Bi, Si and Sb in a range less than 10wt%.

13. Lead-free solder as claimed in any of claims 8 through 12, wherein said solder further contains 0.001 to 1.0 wt% of Si.
